# EUROPEAN PATENT APPLICATION

(11) **EP 4 530 944 A1**
(43) Date of publication of application: **02.04.2025**
(21) Application number: 23306622.4
(22) Date of filing: 27.09.2023
(51) Int. Cl.: G06Q 10/04, G06Q 10/0631

(54) **METHOD AND APPARATUS FOR ASSIGNING TICKETS TO AGENTS**

(71) Applicant: ATOS FRANCE, 95870 Bezons (FR)
(72) Inventor: Jaiswal, Abhilash, 411021 Pune (IN); Bhattacharya, Deepan, 743144 Ichapur (IN)
(74) Representative: Novagraaf Technologies

(57) **Abstract**

The disclosure relates to a method for assigning a ticket to an agent, comprising:
- selecting (20) from an incident table (ICD) an active ticket to be assigned to an agent, said incident table comprising ticket entries, a ticket entry relating to an incident requiring an action of resolution and comprising ticket information about the incident,
- searching (21) for at least one candidate agent by querying a roster table (RST), said roster table comprising entries corresponding to agents, said entries comprising agent information, based on one or more search criteria generated from one or more of said ticket information and applied to said agent information, and
- in case one agent has been found, assigning the ticket to said agent.

## Description

### TECHNICAL FIELD

Various example embodiments relate generally to a method and apparatus for assigning incident tickets to agents.

### BACKGROUND

Ticketing software allows organizations to resolve their internal IT ("Information Technology") issues by streamlining the resolution process. The elements they handle, called tickets, provide contextual information about the issues, including details, categories and any relevant tags. Tickets are usually employee-generated, but automated tickets may also be created when specific incidents occur and are flagged. Once a ticket is created, it is assigned to an IT agent to be resolved.

As organisations scale, they need a means of managing employee issues outside of emailing and calling IT departments with requests, or approaching IT professionals to explain the issue in person. Ticketing software takes all service requests and converts them into a single point of contact. These ticketing systems can store and manage all HR, legal, IT and other queries.

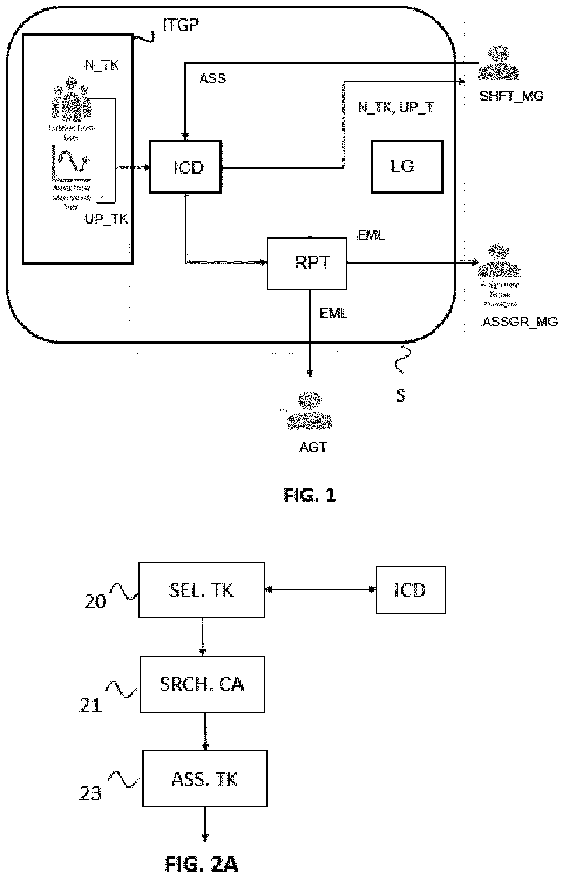

In relation with FIG. 1, an Information Technology Service Management, ITSM, system S is schematically presented. This is a software platform comprising a module TG for generating a ticket upon reception of an information representative of a new event or incident reported by a user or by the ITSM system itself or for updating an already registered ticket upon receipt of an alert notification, for instance from monitoring means. The system S further comprises an incident table ICD comprising entries, each entry comprising incident description information associated with an identifier of the ticket and the current time. Once logged in the ICD table, the new or updated entries are notified to a shift or team manager in charge of manually assigning the ticket to a qualified and available agent. Assignment to the selected agent maybe done by updating the corresponding entry in the ICD table with the IT agent name or identifier. Moreover, the system may further comprise reporting means for sending a message to inform the agent that a new ticket has been assigned to him. Possibly, the message may be copied to one or more other IT employees such as an assignment group manager ASSGR-MG in charge of the IT agents qualified for handling incidents dealing with one or more technical domains such as network or databases. The ITSM system S may further comprise a logged-in table LG, comprising the users of the system, who are currently logged in the ITSM system S.

An issue with a 24x7 operational model, is that shift managers and team leads face the challenge of efficiently managing ticket assignments within a dynamic queue. The manual process of checking for new tickets and assigning them to the most suitable and available analyst is time-consuming and prone to errors. Moreover, shift managers must continuously monitor the queue to ensure compliance with response service level agreements (SLAs) while considering various factors such as shift rosters, last-minute shift changes, resource levels, and analyst workload.

These complexities create a need for an automated solution that can intelligently handle ticket assignment, alleviating the burden on shift managers and ensuring efficient utilization of resources while meeting SLA requirements.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, it is proposed a method for assigning a ticket to an agent, comprising:
- selecting from an incident table an active ticket to be assigned to an agent, said incident table comprising ticket entries, a ticket entry relating to an incident requiring an action of resolution and comprising ticket information about the incident,
- searching for at least one candidate agent by querying a roster table, said roster table comprising entries corresponding to agents, said entries comprising agent information, based on one or more search criteria generated from one or more of said ticket information and applied to said agent information, and
- In case one agent has been found, assigning the ticket to said agent.

It is thus proposed a solution for automatically assigning a ticket to an IT agent who is currently at work and available for handling the ticket. This solution is based on a searchable new table, namely a roster table comprising entries associating IT agent description information and consists in searching available and qualified IT agent by applying searching criteria generated from one or more of said ticket information to said agent information.

An advantage is that the ticket is assigned to the best qualified IT agent that is present in the roster table and available, in a quick and efficient way, without the need for or with minimal manual intervention.

Another advantage of the solution is that it may be executed asynchronously with respect to a way the incident table is fed, thus independently from insertion or update of tickets into this table. It may be continuously running in back-end without causing any performance impact to the ITSM system.

Yet another advantage is that more than one executions of the method may be launched in parallel, allowing all the active tickets registered in the incident table to be processed at a time.

This first aspect may comprise other features, alone or in combination, that are now presented.

In one or more exemplary embodiments, said selecting further comprises:
- obtaining the ticket from said incident table,
- checking according to one or more validation criteria, if one or more pieces of ticket information match expected values, comprising checking that a status of the ticket is set to a 'new" value or to an "in-progress" value, and that an "assigned to" description field is not filled in, and
- validating or not said ticket is active and to be assigned to an agent, depending on a result of the checking.

An advantage is that it is checked that the incoming ticket qualifies for an automated assignment. If yes, the ticket is validated then the searching is triggered. If not, processing of the current ticket may end and another ticket may be obtained from the incident table.

In one or more exemplary embodiments, said one or more ticket information belongs to a group comprising:
- an identifier of the ticket,
- a status of the ticket,
- an agent identifier to which the ticket is assigned,
- an assignment group of the incident,
- a priority level of the incident,
- a customer name,
- an open time.

In one or more examples, one of said pieces of ticket information comprises an "assignment group" field and it is checked said field is filled-in, e.g. not blank. In another example, it is checked it is filled in with a suitable value, that is corresponding to an existing assignment group.

In one or more examples, one of said pieces of ticket information comprises an open time storing the time at which the ticket was generated..

In one or more exemplary embodiments, said selecting comprises triggering a time counter and waiting for said time counter having reached a given time expiration value before executing the checking and the validating.

This allows to let time to an automation bot of the ITSM system, configured for auto healing, to pick-up a new or updated incoming ticket of the incident table and to try to solve the incident without human intervention.

In one or more exemplary embodiments, said one or more agent information belongs to a group comprising:
- an agent identifier,
- a working time period,
- an assignment group,
- a resource level,
- a customer name.

According to one or more exemplary embodiments, said one or more agent information comprises a working time period and said searching comprises:
- querying the roster table with a first search criterion comprising checking that a working time period including an open time of the ticket, obtaining a list of candidate IT agents associated with said working time period, said list comprising, for said candidate IT agents, agent information related to an assignment group and to a resource level, and
- filtering the list by applying one or more filtering criteria to other agent description information.

An advantage is that candidate IT agents that are obtained are rostered and planned to be at work at the current time of the ticket.

In one or more exemplary embodiments, the one or more filtering criteria belong to a group comprising:
- checking, for one of said candidate IT agents and from a logged-in table (LG), if the candidate IT agent is logged in the ITSM system, ,
- checking if the current time if falling under a handover slot between two consecutive shift periods,
- checking if the priority level of the ticket is matching a resource level of the candidate IT agent,
- checking if the assignment group of the ticket is matching the assignment group of the current candidate IT agent,
- checking if the customer name of the ticket is matching the customer name of the candidate IT agent,
- checking the assignment group matches the assignment group of the ticket.

One or more of these filtering criteria may be applied to filter the list.

According to one or more exemplary embodiments, in case the filtering with one of said filtering criteria results in an empty list, the method further comprises, depending on a priority level of the ticket, sending an information message to a user, said message indicating that no agent has been found.

The user may be a shift manager or an assignment group manager who has a knowledge about availability of agents. Informing them about an urgent ticket that needs to be assigned may conduct them to ask an available IT agent to get immediately registered into the roster table.

Decision of sending or not a notification message to a user may depends o a priority level of the ticket. If the ticket is urgent for example because the incident is blocking, the shift manager will be alerted. They may find an available IT agent and ask them to get registered into the roster table, in order to reinforce the team. The current ticket for which no IT agent was found at the current time, will be selected once again for automated assignment at a next iteration of the method.

According to one or more exemplary embodiments, in case the filtering with one of said filtering criteria results in an empty list, said filtering with said filtering criterion is cancelled, the filtering criterion is replaced with a replacement filtering criterion and the filtering repeated with the replacement filtering criterion.

In one or more examples, the requirement corresponding to the replacement filtering criterion is lowered. For instance, if no IT agent is available in the list with the highest resource level L3 an IT agent with a lower resource level L2 is searched for.

According to one or more exemplary embodiments, the steps of the method are iterated based on a triggering event.

The triggering event may be a time event and a new iteration of the method may be launched on a time, for instance regular basis. In another example, the event is a detection of new tickets in the incident table. In another example, the non-assigned ticket(s) of previous iterations have been stored in a bin and the triggering event is detecting that the bin in not empty.

Indeed, as the status of the ticket is not changed (still "in Progress" with assigned to field left blank), the ticket will be selected in the next polling with the other active tickets qualifying for an automatic assignment. If, in the meantime, an IT agent has become available and has been added to the roster table (or rostered), the method may succeed in assigning the ticket to them.

According to a second aspect, an apparatus comprises means for performing the method comprising:
- selecting from an incident table an active ticket to be assigned to an agent, said incident table comprising ticket entries, a ticket entry relating to an incident requiring an action of resolution and comprising ticket information about the incident,
- searching for at least one candidate agent by querying a roster table, said roster table comprising entries corresponding to agents, said entries comprising agent information, based on one or more search criteria generated from one or more of said ticket information and applied to said agent information,
- in case one agent has been found, assigning the ticket to said agent.

The apparatus may comprise means for performing one or more or all steps of the method according to the first aspect. The means may include circuitry configured to perform one or more or all steps of a method according to the first aspect. The means may include at least one processor and at least one memory storing instructions that, when executed by the at least one processor, cause the apparatus to perform one or more or all steps of a method according to the first aspect.

According to a third aspect, an apparatus comprises at least one processor and at least one memory storing instructions that, when executed by the at least one processor, cause the apparatus to perform:
- selecting from an incident table an active ticket to be assigned to an agent, said incident table comprising ticket entries, a ticket entry relating to an incident requiring an action of resolution and comprising ticket information about the incident,
- searching for at least one candidate agent by querying a roster table, said roster table comprising entries corresponding to agents, said entries comprising agent information, based on one or more search criteria generated from one or more of said ticket information and applied to said agent information,
- in case one agent has been found, assigning the ticket to said agent.

The instructions, when executed by the at least one processor, may cause the apparatus to perform one or more or all steps of a method according to the first aspect.

According to a fourth aspect, a system for managing information technology services, comprising a module for generating incident tickets is proposed. Said system further comprises a roster table comprising entries corresponding to agents, said entries comprising agent information and an apparatus according to the second or the third aspect.

According to a fifth aspect, a computer program comprises instructions that, when executed by an apparatus, cause the apparatus to perform:
- selecting from an incident table an active ticket to be assigned to an agent, said incident table comprising ticket entries, a ticket entry relating to an incident requiring an action of resolution and comprising ticket information about the incident,
- searching for at least one candidate agent by querying a roster table, said roster table comprising entries corresponding to agents, said entries comprising agent information, based on one or more search criteria generated from one or more of said ticket information and applied to said agent information,
- in case one agent has been found, assigning the ticket to said agent.

The instructions may cause the apparatus to perform one or more or all steps of a method according to the first aspect.

According to a sixth aspect, a non-transitory computer-readable medium is proposed for storing the computer program according to the fourth aspect.

The apparatus, the computer program and the system may present the same advantages as the method according to the first aspect.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 (already described) is a block diagram schematically illustrating an IT Service Management system comprising an incident ticketing generation and processing module according to the prior art,
FIG. 2A is a flowchart schematically illustrating a method for assigning an incoming ticket to an IT agent according to an example,
FIG. 2B is a flowchart schematically describing a selection of a ticket to be handled by the method according to an example.
FIG. 3A schematically illustrates a roster table comprising description information about rostered agents within a given time period according to an example.
FIG. 3B schematically illustrates a shift code reference table SHT_CR comprising correspondence between shift time codes and shift working time periods according to an example.
FIG. 4 is a flowchart schematically describing a step of searching a list of candidate IT agents from a roster table according to an example.
FIG. 5 is a flowchart schematically describing a step of filtering the obtained list of candidate IT agents according to an example.
FIG. 6 is a flowchart schematically illustrating a method for assigning an incoming ticket to an agent according to another example.
FIG. 7 is a block diagram schematically illustrating an exemplary functional structure of an apparatus implementing a method for assigning a ticket to an IT agent according to an example.
FIG. 8 is a block diagram schematically illustrating an exemplary hardware structure of an apparatus implementing a method for assigning a ticket to an IT agent according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

In the following, different exemplary embodiments will be described using, as an example of an IT Service Management system to which the exemplary embodiments may be applied, such as for instance, the ITSM system ServiceNow^{®}, without restricting the exemplary embodiments to such an architecture, however. It is obvious for a person skilled in the art that the exemplary embodiments may also be applied to other kinds of ITSM systems, such as BMC Remedy^{©} or Symphony AI Summit^{©} having suitable means by adjusting parameters and procedures appropriately.

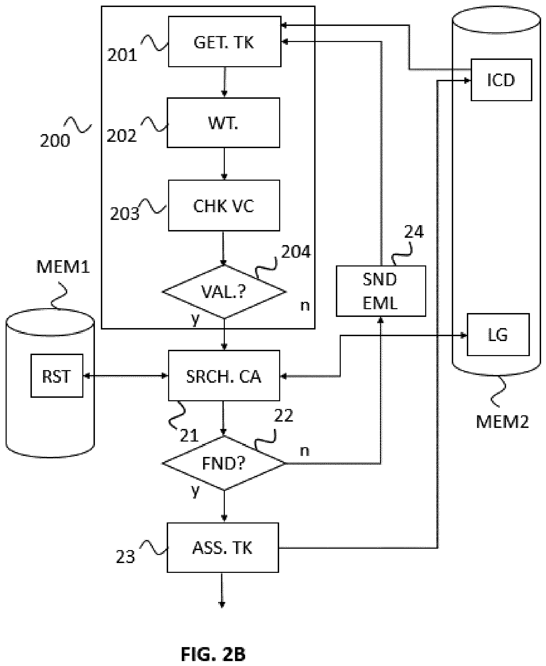

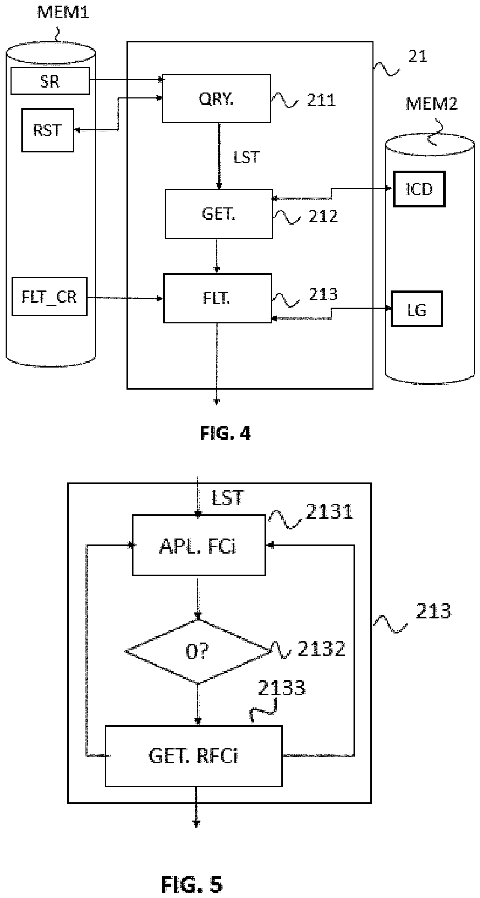

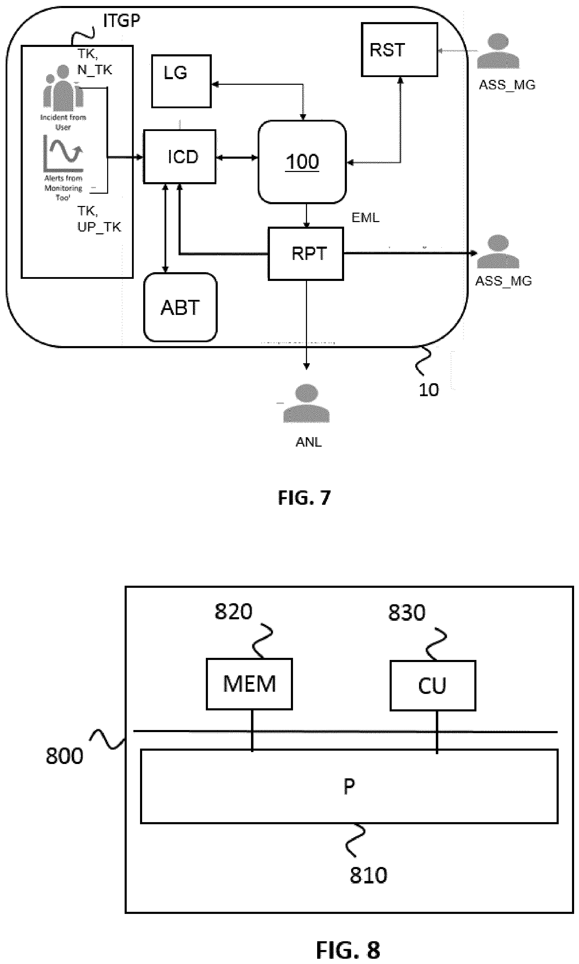

FIG. 2A shows a flowchart of a method for automatically assigning an incoming ticket to an IT agent. FIGs 2B, 4 and 5 illustrate and one or more non-limiting exemplary embodiments of the method described herein. Said method may use a new searchable roster table specifically created for said method, comprising description information about rostered IT agents within a given working time according to one or more examples described herein in relation with FIG. 5. The steps of the method may be implemented by an apparatus 100 according to any example described herein, in relation with FIGs. 7 and 8. Said apparatus 100 may be integrated into or alternatively connected to an ITSM system 10.

While the steps of the method are described in a sequential manner, the man skilled in the art will appreciate that some steps may be omitted, combined, performed in different order and / or in parallel. Moreover, while the steps of the method are described for one ticket TK, more than one executions or jobs of the method may be launched in parallel for handling the more than one tickets

Referring to FIG. 2A, at least one ticket TK to be assigned to an IT agent is selected in a step 20. Such a ticket is related to an IT service request, for instance to incident that occurred when executing an IT service or an IT infrastructure. Said ticket is selected from an incident table ICD, which may be provided and managed by the ITSM system.

In a step 21, candidate IT agents for handling this ticket are searched by querying a a roster table (RST), said roster table comprising entries corresponding to agents and comprising agent information, based on one or more search criteria generated from one or more of said ticket information and applied to said agent information,

In case one agent has been found in 22, the ticket is assigned to said agent in a step 23.

If no IT agent has been found in 22, then the ticket will be handled again in one or more further iterations of the method while not assigned to an IT agent. Back to step 20, incident table ICD may comprise tickets related to IT incidents. More precisely, incident table ICD comprises an entry per ticket, said entry comprising description information about the ticket and the related incident.

In the following, an incident may encompass various types of issues or requests related to IT systems or services the ITSM system is in charge to manage and/or monitor. For example, an incident may comprise a system-generated incident, upon detection of a "Memory full" event in a Server, a user Generated incident, for instance upon receipt of an "access denied" message from a server.

The IT service request may also relate to fulfillment and change request in the IT component. For example, it may comprise a user request for installation of a new application on their laptop or a request from a rostered agent working on the IT service or system to make changes of configuration on a server.

In one or more examples, a ticket entry in incident table ICD comprises at least: a ticket identifier, a status of the ticket (having for instance a value in a group comprising : New, In Progress, On hold, Resolved, closed or canceled), a field of information "assigned to", an assignment group (or technical domain), which may be related to the IT service for which the incident occurred, a Priority level, depending for instance if the incident is blocking or not, a customer or caller name, that is for instance the company name to which the user who created the ticket TK belongs a description field, for shortly describing the issue, and an open time, corresponding to the time at which the ticket was generated.

Incident table ICD may be fed by a module TG for generating a ticket upon reception of an information representative of a new event or incident or for updating an already registered tickets upon receipt of an alert notification, for instance from a monitoring tool. Ticket having a status value set to "new" are tickets newly created by a user of IT services or originating from an IT infrastructure monitoring or system generated events. "In Progress" tickets have already been assigned to an IT agent, or are being processed by an automation bot in charge of auto healing, but they have not been fully processed yet, in other words they are "not resolved". Both are active tickets. Otherwise, when the incident is resolved, status of the ticket is set to "resolved" and it is no more considered as active.

Selection 20 consists in selecting from the incident table ICD an active ticket which has not been assigned to an IT agent yet. It may be a new ticket or an updated ticket, but also an active ticket that is neither new or updated yet but the method failed to assign to an IT agent during a first iteration.

It should be noted that selection of an active ticket is not triggered by detection of a new or updated ticket in the incident table. An advantage is that the method may be executed asynchronously with respect to a way the incident table is fed, thus independently from insertion or update of tickets into this table. For instance, it may be continuously keeps running in back-end and polling the ICD table to get updated information about the tickets stored therein.

Once selected, the ticket is processed by a searching step 21. Searching step 21 comprises obtaining, at least one candidate IT agent by querying a roster table RST based on one or more search criteria.

The ticket is then assigned to one of these candidate IT agents in 23. "assigned-to' field of the ticket is filled in with an identifier of the IT agent and selecting step is reiterated.

In a non-limiting exemplary embodiment illustrated by FIG. 2B, selecting step 20 is performed as follows:

In a step 201, a ticket TK is obtained from incident table ICD, associated ticket information is read and stored in a memory MEM2. In 203, one or more validation criteria VC are checked. An objective is to verify that the obtained ticket TK qualifies for being automatically assigned to an IT agent. To this end, one or more values of ticket information fields of the ticket TK are checked by comparison with given expected values, for example stored in memory MEM2.

In one or more examples, it is firstly checked that the ticket status is set to "new" or "in-progress", but not "resolved", and that the "assigned to" field is left blank. In other words, only active and not yet assigned to tickets will pass this first test. Conversely, a ticket TK with a status set to "resolved" or an assigned to field already filled in, should be rejected..

In one or more examples, a ticket having passed the first test may be submitted to a second test comprising checking that the "assignment group" description field is not blank. In the following, assignment group will stand for designing both a technical or expertise domain, for instance "database" or "network" and a team of IT agents skilled for handling tickets related to incident in this technical domain. Knowledge of this information of assignment group is relevant and highly needed to make sure the ticket will be assigned to a qualified agent.

Finally, a validation or non-validation of the current ticket is made in 204 based on the results of the checking step 203. In case of non-validation, current ticket is rejected. Another ticket may be obtained from incident table ICD in 201.

In one or more examples, said validation 21 comprises in 202 triggering a time counter before starting the checking step 203. For instance, a waiting time period is set to 30 seconds and checking step 203 is launched at expiration of this waiting time period. This is to let time to the ITSM system to pick-up an incoming ticket, for instance a new ticket, have it worked upon in parallel by an automation bot for auto healing. If, at the end of the waiting time period, the status of the ticket is still "new" or "in-progress" with no assigned agent in the assigned agent field, this means that the automation bot failed and that assignment of the ticket to a human IT agent is needed. An advantage of this approach is the method can work cohesively with an automation bot and they complement each other.

In case a negative decision is made, I. e. ticket TK is not validated because ticket has either the "resolved" status put by the automation bot after solving the issue or is still been worked upon during In Progress status, processing of the ticket TK comes to an end and the method may start with selecting a next ticket.

In the following, the case of a positive decision of validation is detailed. The selected ticket TK is processed according to the following steps:

In a step 21, at least one candidate IT agent is obtained by querying a roster table RST based on one more search criteria. These search criteria may comprise or be generated from the ticket information read from the ticket TK as will be described herein. In one or more examples, these search criteria may belong to a group comprising:
- a working time period of the searched IT agent including the open time of the generated ticket,
- an assignment group of the searched IT which is a technical domain in which the IT agent is specialized corresponding the assignment group of the ticket,
- a resource level adapted to a priority level of the ticket,
- a customer name matching the customer name of the ticket.

The roster table RST is not an in-built ITSM table, but a new custom table in the ITSM system proposed by the inventors, that holds shift roster information about IT agents of a team. More precisely, the roster table RST comprises entries about rostered or logged-in IT agents, that is IT agents that are planned to be at work during a given time period including the current time. Each entry associates an IT agent identifier (for instance an employee identifier) with description information about this IT agent. For instance, these fields of information may be completed for each given time period, for instance one week or one month, by a team manager that must have access to edit this roster table. In one or more examples, bulk upload from a table file, for instance in excel format, may be allowed to load data more efficiently, especially for numerous teams. Shift roster has to be updated by Assignment Group Manager/Shift Manager at regular basis through our invention (custom table), maybe fortnightly/monthly (depending on the onboarded team policy related to Shift roster). This allows to have the updated resource information which will be used by the method for auto assignment.

For example, the roster table is created in the ITSM system, using development tools that are made available by the ITSM system now, as is the case in ServiceNow^{®}) for example.

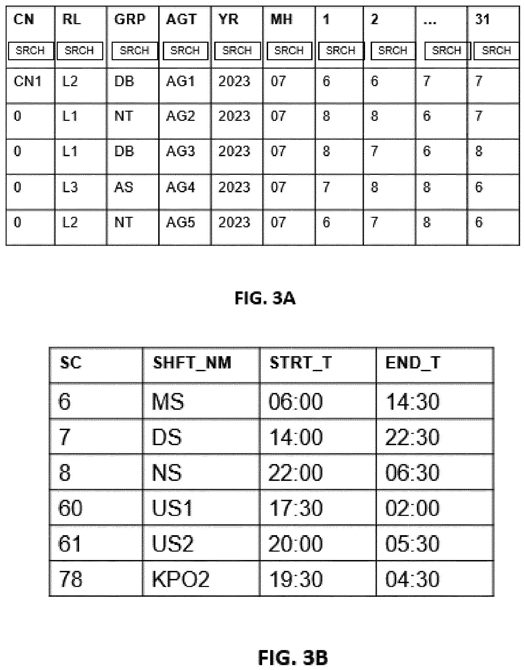

In one or more examples illustrated by FIG. 3A, the fields of description information of the roster table RST may comprise information representative of :
- A customer name, CN, indicating a customer the IT agent t is dedicatedly working with. In this regard, and IT agent may be associated with multiple customers name row entries applicable in case of supporting multiple customers (shared agent),
- A resource level Li, for instance with I integer equal to 1-3, L3 being the highest skill level and L1 the lowest skill level,
- An assignment or resolver group, GRP, corresponding to a technical field in which the IT agent is specialized,
- Working Time, comprising year, YR, month, MH, and day, D, of the considered time period. For example, the D field is filled in with a shift code SHF_ID corresponding to a shift working time period within a day.
- Shift Manager Email ID (not represented), comprising for example an Email address of the shift manager,
- Group Email ID, comprising an Email address for the assignment group (not represented).

Team or equivalently assignment group Manager of a team of IT agents should have 'write' permission to this table for updating the roster.

In one or more examples, the roster table is periodically checked to remove duplicate entries. As soon as new entry is created a rule will search if any old duplicate entry is there and delete the same.

The 24 hours of a day are covered by several shifts or working time periods that may be overlapping. In one or more examples illustrated by FIG 3B, three shift periods are considered:
- a morning shift period MS , identified by shift code SC = 6, starts at 6:30 in the morning and ends at 14:30 (or 2:30 PM),
- a day shift period DS, identified by shift code SC = 7, starts at 2:00 PM and ends at 22:30 (or 10:30 PM) and
- a night shift period NS, identified by shift code SC=8 starts at 20:00 (or 8:00 PM) and ends at 06:30 in the morning (or 6:30 AM).

It should be noted that in this example, two consecutive shift working periods defined so as to have an overlap interval or handover slot, of half an hour. This allows to ensure that there is always one operational IT agent on a given shift.

For instance, the IT agent named or identified with employee identifier NM1 has a resource level L2, is specialized in databases, DB, and is planned to work with the morning shift MS team on July, 1st 2023.

Several strategies or logics for implementing the search of one or more candidate IT agents by querying the roster table RST may be adopted. One or more examples will be described herein in relation with FIGs 4 to 6. In case at least one candidate IT agent has been found (step 22), the at least one candidate IT agent is provided to an assignment step 23. If only one candidate IT agent has been found, the ticket TK is directly assigned to this IT agent. For instance, the "assigned-to" field is filled in with the IT agent identifier. In one or more examples, a notification message EML may be sent in step 24 to this IT agent to inform them that a new case is assigned to them. If no candidate IT agent has been found, a new iteration of the method is launched. As the non-assigned ticket is still active with no IT agent assigned, it will be selected again in the next iteration (20), and handled once more.

If more than one candidate IT agents have been found, step 21 comprises filtering a list comprising the candidate IT agents to get the best candidate IT agent as will now be described in more detail in relation to FIGs 4 to 6.

Referring now to FIG. 4, an exemplary embodiment of searching step 21 is detailed. In a sub-step 211, the roster table RST is queried based on given search criteria SC. In one or more examples, the search criteria SC comprise at least one time-related search criterion: only the rostered IT agent planned on a shift period including the open time of the ticket are obtained.

In one or more examples, the search criteria comprise another search criterion related to the assignment group: only the IT agents belonging to the team corresponding to the assignment group are searched. This allows to restrict the list to IT agents having technical skills suited to the type of incident that occurred.

Based on this query, a list LST of candidate IT agents is obtained. For instance, if the current time is July 2, 2023, 14:15, the IT rostered agents put in the list LST are those planned for shift periods coded 6 and 7, that is AG1, AG3 and AG5. For instance, the assignment group is "database". In one or more examples, some agent description information related to the candidate IT agents are read and stored in a memory. For instance, they comprise the resource level.

In a sub-step 212, one or more information field values of the ticket TK related to the incident are read, either in the ICD table or in a memory MEM1, in case they have been stored therein in an earlier step, for instance in 20. For instance, the information of priority level PL of the incident is obtained.

In a sub-step 213, the list is filtered using one or more filtering criteria FC, generated from the incident related information field values and one or more predefined filtering rules. In one or more examples, candidate IT agents are scanned successively according to a given scanning order, for instance the list order. In one or more examples, the following filtering rules FR are applied to each of the listed candidate IT agents:
- FC1 :Check, for a current candidate IT agent, if the candidate IT agent is logged in the ITSM system, i.e currently at work and thus available for handling the ticket. In one or more examples, this may be achieved by accessing an in-built table of the ITSM system, namely a log table LG comprising information about the logged-in users of the ITSM system. It should be noted that an IT agent will log out from the ITSM system if going on long break. It should be noted that in case the IT agent is sick or on unplanned leave, by default the ITSM system may be configured to log out the IT agent after an inactivity timeout that may be customizable,
- FC2 : Check if current time if falling under a handover time slot between two consecutive shift or working time periods, and if yes, remove from the list LST the candidate IT agent if associated to the shift period about to end,
- FC3 : Check if the priority level of the ticket is matching a resource level of the current candidate IT agent. For instance, the highest level of priority P1 goes with the highest resource level L3. In case there is no match the current IT agent may be removed from the list LST or another logic could be applied as will be described in relation with FIG. 5.. In one or more examples, among the remaining IT agents in the list, any IT agent who already has another active P1 ticket in their queue is excluded.
- FC4 : Get an indicator of workload of each candidate IT agent of the list LST. For example, this indicator of workload may comprise a number of tickets already in a bin associated with the candidate IT agent. In one or more examples, the incident table ICD may be filtered down to get this number of active tickets already assigned to this IT agent, and thus waiting in their bin, which is an information of workload. In one or more examples, the values of this indicator of workload are compared between the candidate IT agents. For instance, the candidate IT agents may be ranked in an order inversely proportional to the value of their indicator of workload, so that the less busy IT agents are selected at first. In another example, the two or more agents are found with equal number of active tickets in their respective bins, then it will be going with agent who have received the ticket firstly and subsequently same order for next remaining agents.
- FC5 : Check if the customer name of the ticket is matching the customer name of the current candidate IT agent. This filtering criterion may be optional.

In one or more examples, all the candidate IT agents of the list LST are scanned and those that do not meet at least FC1, FC2 and FC3 filtering criteria are removed from the list LST. case more than one candidate IT agents remain in the list, only one IT agent is retained. It may be the one who is ranked first according to FC4 may be selected, which allows to assign the ticket to the IT agent currently having the lowest workload level. This further contributes to achieve load balancing within the team or assignment group. In one or more examples FC5 may also be used to select one of them.

In one or more examples, the above-mentioned filtering criteria or rules may be applied sequentially to the listed candidate IT agents, according to a predefined order, which may be related to their relevance. For instance, strong or even mandatory requirements are applied firstly (such as FC1 to FC3) to the whole list LST. FC4 related to workload is a strong requirement because it may not be efficient to select an IT agent who has not bandwidth left, but it may not be efficient ever to let ticket unassigned during a long time period. FC5 may be considered as weaker requirement that allow to get an optimal matching but could be skipped in case no candidate IT agent remains in the list LST.

Referring now to FIG. 5, it is assumed that a filtering criterion FCi, with i between 3 to 6 is being applied in sub-step 213 (2131) and that no candidate IT agent remains in the list (2132). The filtering criterion may be replaced with a weaker criterion (2133) and the filtering step 2131 repeated with the replacement criterion RFCi. For instance, no candidate IT agent is found with the required resource level L3. Filtering criterion FC4 is replaced with a replacement FC4 allowing an IT agent having a resource level L2. Further, if no candidate agent is found with an assignment group set to "Database", then urgent notification will be sent to the assignment group manager. As soon as agent has been found (via continuous polling in the backend), the ticket will be assigned.

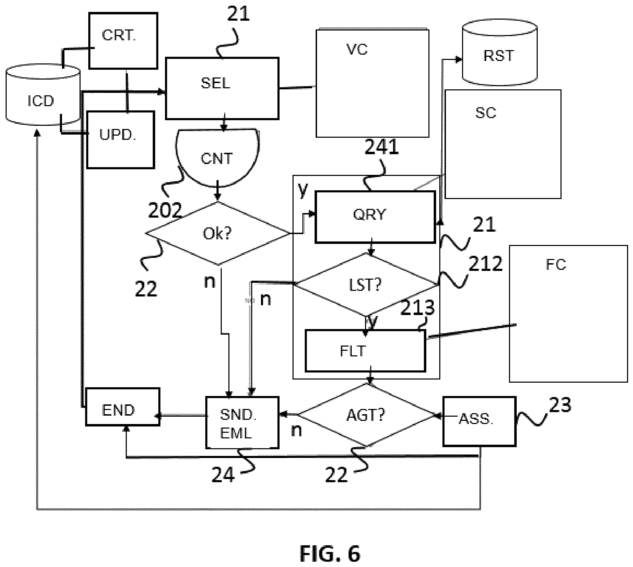

In relation to FIG. 6, an example of implementation of the method for assigning a ticket to a rostered IT agent is described. In 20, a new entry into the incident table ICD or a change of status of an already registered ticket IT is detected.

In 21, a selection step is executed to select a ticket TK from the incident table ICF of the ITSM system 10 and check if it applies for automated assignment of an IT agent according to the method described herein . As described above, validation criteria VC are checked comprising checking that ticket information fields have expected values defined by one or more predefined validation rules (for instance, assignment group field is not blank, status field is set at "new" or "in-progress") and that the ticket is not already assigned to an IT agent. Current time is read and stored in memory, for instance in association with ticket TK. A time counter TC is triggered upon reception of the incoming ticket TK to let time to the ITSM system 10 to have the ticket worked upon by an automation bot ABT if one. For instance, the waiting time period is set to 30 seconds. At the end of this validation time period, a validation decision is made provided the validation criteria are met. If not, process ends and selection of another ticket is launched.

Assuming now the ticket TK has been validated, it is submitted to searching step 21. In 211, roster table RST is queried based on one or more search criteria SC, comprising at least one time-related search criterion in order to get candidate IT agents planned to be currently at work. In one or more examples, another search criterion related to assignment group is used in combination so as to ensure that only IT agents belonging to the team attached to the assignment group (or technical domain) specified in the ticket information are searched for. Some ticket information fields comprising at least the resource level of the IT agents are requested. Priority level of the incident of the ticket TK is read.

A list LST of candidate IT agents, which are rostered at the current time is obtained. Provided the list LST is not empty (212), a filtering of the list LST is performed in 213 based on one or more filtering criteria FC resulting from predefined filtering rules. Among these filtering criteria, some of them are mandatory, such as checking effective presence of the candidate IT agents at work and logged in the ITSM system or checking they are not about to leave (current time falling under a handover time slot). Other are not mandatory and may be used to select one IT agent when more several are left after applying the mandatory search criteria. For example, the candidate IT agent having the largest bandwidth to handle the ticket TK may be selected based on an indicator of workload. In one or more example, in case the list is empty, some non-mandatory filtering criteria representing weaker requirements and may be automatically lowered or even skipped, if needed to retrieve a filtered candidate IT agent. For example, in cases where no L3 IT agent is available during the shift, the ticket is automatically escalated to an L2 IT agent and then to an L1 IT agent, following the predefined downstream hierarchy.

At the end of filtering step 213, either one best IT agent has been found (22) and in this case, entry corresponding to ticket TK is updated (23) in the incident table ICD to assign the ticket TK to the selected IT agent (identifier AGT of the IT agent is written in description field "assigned to" of the ticket TK), or conversely, a message EML may be sent in step 24, depending on a priority level of the ticket, to an analyst or a team/shift manager to inform them that the ticket TK could not be assigned to an IT agent. The message EML may comprise a subject: with ticket identifier (or number) and a body containing Ticket Number, Short Description, Assignment Group,etc. Indeed, if the priority level of the ticket is high, for example because the incident is blocking, then there is an urgency to solve the issue. The analyst or shift manager may use their knowledge of the available IT agents and directly ask to one of them to get registered into the roster table.

Then, in one or more next iterations of the method, as the non-assigned ticket is still active with no IT agent assigned, it will be selected in 20 and the roster table may be polled again for this ticket in 21 until a qualified IT agent is found in 22.

In relation to FIG. 7, an apparatus 100 for assigning an incoming ticket to a an IT agent is now presented. In one or more examples, said apparatus 100 is configured to implement the method that has been described above in relation to FIGs 2A, 2B, 4, 5 and 6. As illustrated by the example of FIG. 7, the apparatus 100 may be integrated into an ITSM system 10.

As an input, the apparatus 100 is configured to select a ticket TK which may be either a newly created ticket N_TK or an already existing ticket UP_T. In one or more examples, the apparatus 100 is configured to get this ticket from an incident table ICD, which is fed with incoming tickets by an in-built module TG for generating tickets of the ITSM system 10. This incident table ICD exists in the in-built ITSM system and comprises entries corresponding to tickets TK that associate description information about the incident with identifier and status of the ticket. In one or more examples, an event registry detection module (not represented) may be configured to detection of:
a) Incase of any new ticket created
b) Updating in the existing ticket in Incident table.

In one or more example, the apparatus 100 is configured to select a ticket among these detected tickets, but it may further be configured to reselect a previously selected ticket, for which automatic assignment failed.

In one or more examples, the apparatus 100 is further configured to validate, based on predefined validation rules whether or not a ticket obtained from the ICD table applies for automated assignment. In the positive, the apparatus 100 is further configured to interact with roster table RST, for instance stored in a memory (not represented) of the ITSM system 10 and periodically fed by shift managers SHT_MG, to search for candidate IT agents available and qualified for handling an incoming ticket TK by applying one or more policy rules ( searching and filtering rules) that may be stored in one more of its memories (not represented). As described above in relation to FIG. 2A, 2B, 4-6, at least one other table from the in-built ITSM system 10 may be accessed to get needed information about the IT agents who are registered into the roster table, or rostered, such as for instance a table LG comprising information about the logged-in users of the ITSM system. In order to get information about a workload of a listed candidate IT agent, the incident table ICD may be filtered down to get a number of active tickets already assigned to this IT agent, and thus waiting in their bin.

In one or more examples, the apparatus 100 is configured to continuously keep polling the different tables (ICD, LG) to update relevant information about the rostered IT agents to be used to automatically assign a current ticket to them according to the method described herein. For instance, in case of automatic assignment failure for a previous ticket which is thus still waiting for being assigned in the incident table, this polling provides information about changes, for instance that an additional IT agent logged in.

Output of the apparatus 100 is either assigning the ticket to an IT agent identifier, if any has been found, or conversely reporting to an authorized user that a problem occurred. For example, reporting may comprise sending a message EML, for instance an email, to an authorized user to notify them of automatic assignment failure for a current ticket. For instance, a reason for failure may be that no IT agent meeting the search criteria has been found. In one or more embodiments, the apparatus 100 is configured to send the message to a reporting module RPT that will notify the authorized user (for instance the assignment group manager). In another example, reporting may be done in all cases, even if automatic assignment is a success, for instance for statistical purposes.

More generally the system 10 may send notifications, for instance emails to assignment group managers in various scenarios, including unassigned P1 or high-priority tickets and instances where no activity has been performed within the stipulated timeframe.

The method and apparatus for assigning a ticket to a rostered IT agent applies to any ITSM system and presents many advantages.

Through its robust implementation, the method and system contribute to dramatically improve the ticket assignment process, enabling seamless automation, efficient IT agent selection, proactive notifications, and insightful reporting and dashboarding. This practical solution enhances incident management within an ITSM (like ServiceNow) system, ensuring timely ticket resolution, improved efficiency, agent productivity increase and enhanced stakeholder satisfaction.

Their benefits are numerous :
High Priority Incidents: the method presented herein is specially designed for assigning P1 incidents that require immediate attention. By considering IT agent availability, skill levels, and workload, the most qualified analysts are promptly assigned to handle critical issues, reducing response and resolution times.

Efficient Workload Distribution: the method presented herein ensures an even distribution of incidents among IT agents by considering the number of active tickets. This prevents any single IT agent from being overloaded and optimizes resource utilization.

Improved Customer Satisfaction: With faster response and resolution times, customers experience reduced downtime, increased service quality, and enhanced satisfaction.

Scalability and Adaptability: the solution presented herein leverages ITSM's (like ServiceNow) data-rich environment and can be seamlessly integrated into any IT infrastructure, making it highly scalable and adaptable for organizations of all sizes.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe operations as a sequential process, many of the operations may be performed in parallel, concurrently or simultaneously. Also some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

FIG. 8 illustrates an apparatus 800, which may be an apparatus such as, or comprised in an ITSM system 10, according to an exemplary embodiment. The apparatus 800 comprises a processor 810. The processor 810 interprets computer program instructions and processes data. The computer instructions cause the apparatus to implement the method presented herein in its various embodiments. The processor 810 may comprise one or more programmable processors.

The processor 810 is coupled to a memory 820. The processor is configured to read and write data to and from the memory 820. The memory 820 may comprise one or more memory units. The memory units may be volatile or non-volatile. It is to be noted that in some exemplary embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 820 stores computer readable instructions that are executed by the processor 810. For example, non-volatile memory stores the computer readable instructions and the processor 810 executes the instructions using volatile memory for temporary storage of data and/or instructions.

The computer readable instructions may have been pre-stored to the memory 820 or, alternatively or additionally, they may be copied from a physical entity such as a computer program product. Execution of the computer readable instructions causes the apparatus 800 to perform one or more of the functionalities described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer.

The apparatus 800 further comprises a connectivity unit 830. The connectivity unit 830 enables wired and/or wireless connectivity to one or more external devices. The connectivity unit 850 comprises at least one transmitter and at least one receiver that may be integrated to the apparatus 800 or that the apparatus 800 may be connected to.

It is to be noted that the apparatus 800 may further comprise various components not illustrated in FIG. 8.

Of course, the embodiments described above can be combined with one another.

## Claims

1. A method for assigning a ticket to an agent, comprising:
- selecting (20) from an incident table (ICD) an active ticket to be assigned to an agent, said incident table comprising ticket entries, a ticket entry relating to an incident requiring an action of resolution and comprising ticket information about the incident,
- searching (21) for at least one candidate agent by querying a roster table (RST), said roster table comprising entries corresponding to agents, said entries comprising agent information, based on one or more search criteria generated from one or more of said ticket information and applied to said agent information,
- in case one agent has been found, assigning the ticket to said agent.

2. A method for assigning a ticket to an agent according to claim 1, wherein said selecting (20) further comprises:
- obtaining (201) the ticket from said incident table (ICD),
- checking (203) according to one or more validation criteria, if one or more pieces of ticket information match expected values, comprising checking that a status of the ticket is set to an "in-progress" value, and that an "assigned to" description field is not filled in,
- validating (204) or not said ticket is active and to be assigned to an agent, depending on a result of the checking.

3. The method according to claim 2, wherein, said selecting (20) comprises triggering a time counter (202) and waiting for said time counter having reached a given time expiration value before executing the checking and the validating.

4. The method according to any one of the preceding claims, wherein said one or more agent information belongs to a group comprising:
- an agent identifier,
- a working time period,
- an assignment group,
- a resource level,
- a customer name,

5. The method according to any one of the preceding claims, wherein said one or more ticket information belongs to a group comprising:
- an identifier of the ticket,
- a status of the ticket,
- an agent identifier to which the ticket is assigned,
- an assignment group of the incident,
- a priority level of the incident,
- a customer name,
- an open time.

6. The method according to any one of the preceding claims, wherein, said one or more agent information comprising a working time period, said searching comprises:
- querying (241) the roster table (RST) with a first search criterion comprising checking that a working time period including an open time of the ticket, obtaining a list of candidate IT agents associated with said working time period, said list comprising, for said candidate IT agents, agent information related to an assignment group and to a resource level, and
- filtering (243) the list by applying one or more filtering criteria to other agent description information.

7. The method according to claim 6, wherein the one or more filtering criteria (FC) belong to a group comprising:
- checking, for one of said candidate IT agents and from a logged-in table (LG), if the candidate IT agent is logged in the ITSM system, ,
- checking if the current time if falling under a handover slot between two consecutive shift periods,
- checking if the priority level of the ticket is matching a resource level of the candidate IT agent,
- checking if the assignment group of the ticket is matching the assignment group of the current candidate IT agent,
- checking if the customer name of the ticket is matching the customer name of the candidate IT agent,
- checking the assignment group matches the assignment group of the ticket.

8. The method according to any one of claims 6 and 7, wherein, in case the filtering with one of said filtering criteria results in an empty list, the method comprises, depending on a priority level of the ticket, sending a message to a manager of the assignment group indicating that no agent has been found.

9. The method according to any one of claims 6 and 7, wherein in case the filtering with one of said filtering criteria results in an empty list, said filtering with said filtering criterion is cancelled, the filtering criterion is replaced with a replacement filtering criterion and the filtering repeated with the replacement filtering criterion.

10. The method according to any one of the preceding claims, wherein the steps of the method are iterated based on a triggering event.

11. An apparatus (100, 800) comprising means for performing a method for assigning a ticket to an agent, said means comprising:
- selecting from an incident table (ICD) an active ticket to be assigned to an agent, said incident table comprising ticket entries, a ticket entry relating to an incident requiring an action of resolution and comprising ticket information about the incident,
- searching for at least one candidate agent by querying a roster table (RST), said roster table comprising entries corresponding to agents, said entries comprising agent information, based on one or more search criteria generated from one or more of said ticket information and applied to said agent information,
in case one agent has been found, assigning the ticket to said agent.

12. An apparatus (100, 800) according to claim 11, wherein the means comprise
- at least one processor;
- at least one memory storing instructions that, when executed by the at least one processor, cause the apparatus to perform the method.

13. A system (10) for managing information technology services, comprising a module for generating incident tickets, wherein said system further comprises a roster table (RST) comprising entries corresponding to agents, said entries comprising agent information and an apparatus (100, 800) according to any one of claims 11 and 12.

14. A computer program comprising instructions for causing an apparatus to perform:
- selecting from an incident table an active ticket to be assigned to an agent, said incident table comprising entries, comprising description information about tickets related to incidents requiring an action of resolution,
- searching for at least one candidate agent by querying a roster table , said roster table comprising entries corresponding to agents, said entries comprising agent description information, based on one or more search criteria generated from one or more of said IT incident description information and applied to said agent description information,
- in case one agent has been found, assigning the ticket to said agent.

15. A non-transitory computer-readable medium for storing the computer program according to claim 14.
